# EUROPEAN PATENT SPECIFICATION

(11) **EP 3 753 838 B1**
(45) Date of publication and mention of the grant of the patent: **18.05.2022**
(21) Application number: 19181579.4
(22) Date of filing: 21.06.2019
(51) Int. Cl.: B62M 9/14

(54) **MULTI-SPEED DRIVE HUB FOR BICYCLE**
MEHRGÄNGIGE ANTRIEBSNABE FÜR EIN FAHRRAD
MOYEU D'ENTRAÎNEMENT À PLUSIEURS VITESSES POUR BICYCLETTE

(43) Date of publication of application: 23.12.2020
(73) Proprietor: Lin, Chang Hui, Changhu (TW)
(72) Inventor: LIN, Liang Wei, Changhu (TW); LIN, Chang Hui, Changhu (TW)
(74) Representative: Cabinet Chaillot

(56) References cited:
- EP-A1- 1 183 178
- DE-A1- 4 038 009
- GB-A- 2 280 002
- US-A1- 2017 167 542

## Description

### FIELD OF THE INVENTION

The present invention relates to a multi-speed drive hub for a bicycle in which the at least one drive element drives the sprocket set to move so that the actuator moves to the multiple speed changing positions in a release direction relative to the speed-changing transmission, and the sprocket set smoothly changes to one of the multiple speed changing positions based on using requirements.

### BACKGROUND OF THE INVENTION

A conventional gear ratio changing system commonly used on bicycles that is implemented with planetary or epicyclic gears. The gears and lubricants are sealed within the shell of the hub gear, in contrast with derailleur gears where the gears and mechanism are exposed to the elements. Changing the gear ratio was traditionally accomplished by a shift lever connected to the hub with a Bowden cable, and twist-grip style shifters have become common.

Hub gear systems generally have a long and largely maintenance-free life though some are not suitable for high-stress use in competitions or hilly, off-road conditions. Many commuter or urban cycles such as European city bikes are now commonly fitted with 7-speed gear-hubs and 8-speed systems are becoming increasingly available. Older or less costly utility bicycles often use 3-speed gear-hubs, such as in bicycle sharing systems. Many folding bicycles use 3-speed gear-hubs. Modern developments with up to 14 gear ratios are available. So, it is important to develop a multi-speed drive hub for a bicycle which is capable of changing a riding speeds of the bicycle smoothly based on using requirements.

EP 1183178A1 discloses that a gear device for a bicycle comprising at least one driving sprocket, a sprocket cassette including several driven sprockets of varying diameter, a drive chain which is in engagement with the driving sprocket and with one of the driven sprockets, and a hub which forms part of a bicycle wheel, wherein the sprocket cassette is axially in alignment with the hub and capable of exerting a dynamic torque on the hub by means of a torque transmitter, and wherein the sprocket cassette is movable in axial direction so as to bring the drive chain in engagement with the desired driven sprocket. Therefore, the transmissions of EP 1183178A1 is characterized by use of an endless chain, belt, or the like of changeable ratio using a single chain, belt, or the like involving different-sized wheels, e.g. rear sprocket chain wheels selectively engaged by the chain, belt, or the like the wheels being laterally shiftable. The document EP1183178A1 discloses a multi-speed drive hub for a bicycle, in accordance with the preamble of claim 1.

GB 2280002A discloses that the hub assembly comprises a tubular body part having two axially spaced flanges for connection to the spokes of the wheel, a tubular support extending from one end of the body part, and a sprocket carrier rotatable on the support, the sprocket carrier carrying a number of axially spaced sprockets. The sprockets are mounted on the sprocket carrier so as to be capable of free axial sliding movement, so that when a selected sprocket is being driven by the drive chain, any sideways force applied to the sprocket by misalignment with the drive chain displaces the sprocket axially on the sprocket carrier to correct the misalignment. The sprocket carrier is preferably mounted on bearings and is acted on by springs. Therefore, the transmissions of GB 2280002A is characterized by use of an endless chain, belt, or the like of changeable ratio using a single chain, belt, or the like involving different-sized wheels, e.g. rear sprocket chain wheels selectively engaged by the chain, belt, or the like the wheels being laterally shiftable.

DE 4038009A1 discloses that the multi-sprocket drive mechanism couples the chain from a bicycle pedal sprocket to the rear wheel. It has a series of coaxial toothed rings of different dia. and between which the chain is transferred, to give the desired ratio. A freewheel is provided between the series of rings and the hub. The rings slide axially on the hub. Those no in use can be moved so as to leave distances between them less than those (a) at the left and right between the ring in use and between it and adjacent ones. These distances can be reduced to nil. USE/ADVANTAGE - Derailleur-type bicycle gearchange accommodates a larger number of toothed rings. Therefore, the transmissions of GB 2280002A is characterized by use of an endless chain, belt, or the like of changeable ratio using a single chain, belt, or the like involving different-sized wheels, e.g. rear sprocket chain wheels selectively engaged by the chain, belt, or the like the wheels being laterally shiftable.

US 2017167542 discloses that a bicycle crank assembly includes a sprocket having a rotational center axis, a crank, a crank axle and a slide mechanism. The crank axle is attached to the crank and includes an internal space. The slide mechanism is configured to displace the sprocket relatively to the crank in an axial direction parallel to the rotational center axis. At least part of the slide mechanism is disposed in the internal space of the crank axle. Therefore, it is classified that yielding couplings, i.e. with means permitting movement between the connected parts during the drive adapted to specific functions specially adapted to allow axial displacement by means of rolling elements.

The present invention has arisen to mitigate and/or obviate the afore-described disadvantages.

### SUMMARY OF THE INVENTION

The primary objective of the present invention is to provide a multi-speed drive hub for a bicycle in which the at least one drive element drives the sprocket set to move so that the actuator moves to the multiple speed changing positions in a release direction relative to the speed-changing transmission, and the sprocket set smoothly changes to one of the multiple speed changing positions based on using requirements.

### BRIEF DESCRIPTION OF THE DRAWINGS

FIG. 1 is a perspective view showing the assembly of a multi-speed drive hub for a bicycle according to a preferred embodiment of the present invention.
FIG. 2 is a perspective view showing the exploded components of the multi-speed drive hub for the bicycle according to the preferred embodiment of the present invention.
FIG. 3 is a side plan view showing the assembly of a part of the multi-speed drive hub for the bicycle according to the preferred embodiment of the present invention.
FIG. 4 is a perspective view showing the assembly of a part of the multi-speed drive hub for the bicycle according to the preferred embodiment of the present invention.
FIG. 5 is another perspective view showing the exploded components of the multi-speed drive hub for the bicycle according to the preferred embodiment of the present invention.
FIG. 6 is a perspective view showing the assembly of the multi-speed drive hub for the bicycle according to the preferred embodiment of the present invention.
FIG. 7 is a cross sectional view showing the operation of the multi-speed drive hub for the bicycle according to the preferred embodiment of the present invention.
FIG. 8 is another cross sectional view showing the operation of the multi-speed drive hub for the bicycle according to the preferred embodiment of the present invention.
FIG. 9 is also a side plan view showing the operation of the multi-speed drive hub for the bicycle according to the preferred embodiment of the present invention.
FIG. 10 is an amplified side plan view of a part of FIG. 9.
FIG. 11 is another side plan view showing the operation of the multi-speed drive hub for the bicycle according to the preferred embodiment of the present invention.
FIG. 12 is an amplified side plan view of a part of FIG. 11.
FIG. 13 is also another side plan view showing the operation of the multi-speed drive hub for the bicycle according to the preferred embodiment of the present invention.
FIG. 14 is an amplified side plan view of a part of FIG. 13.

### DETAILED DESCRIPTION OF THE PREFERRED EMBODIMENTS

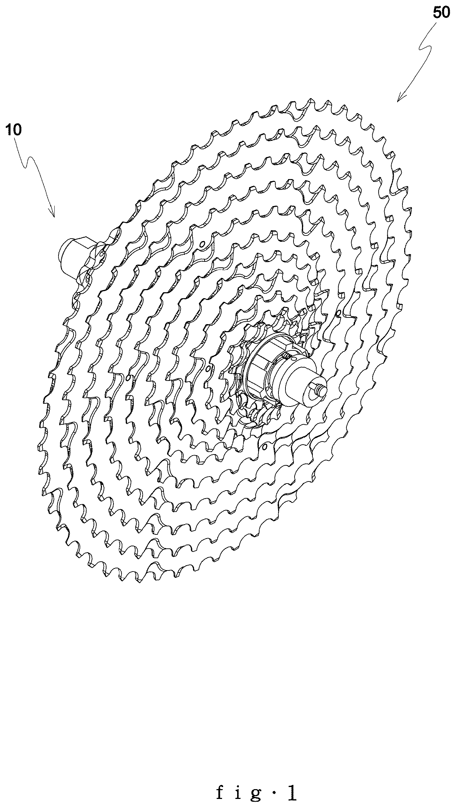

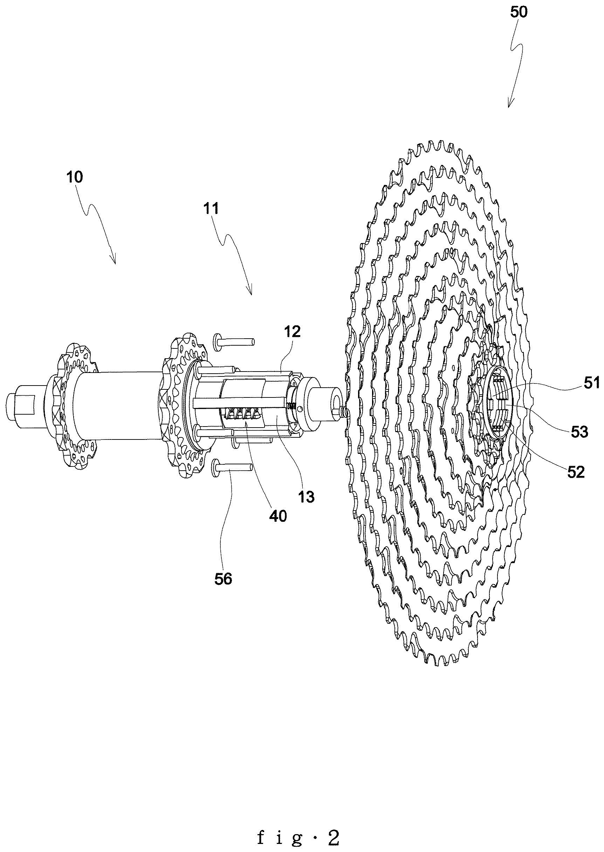

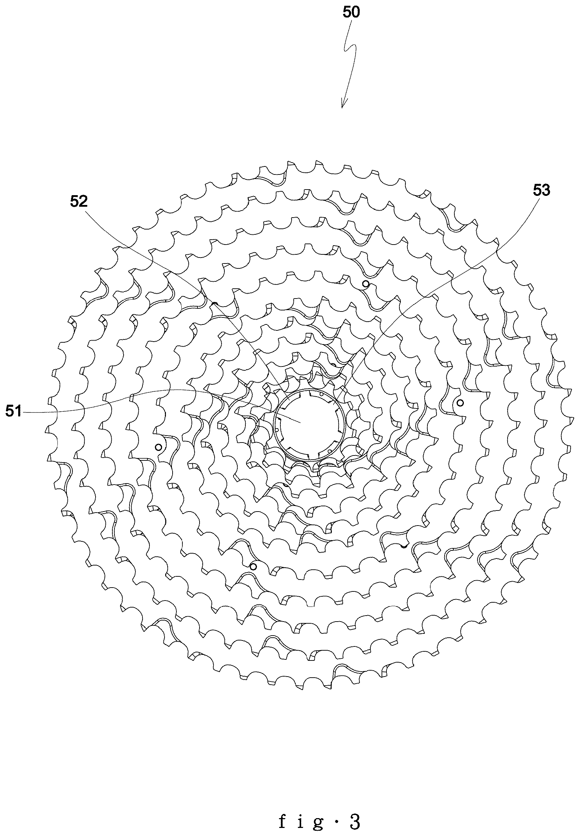

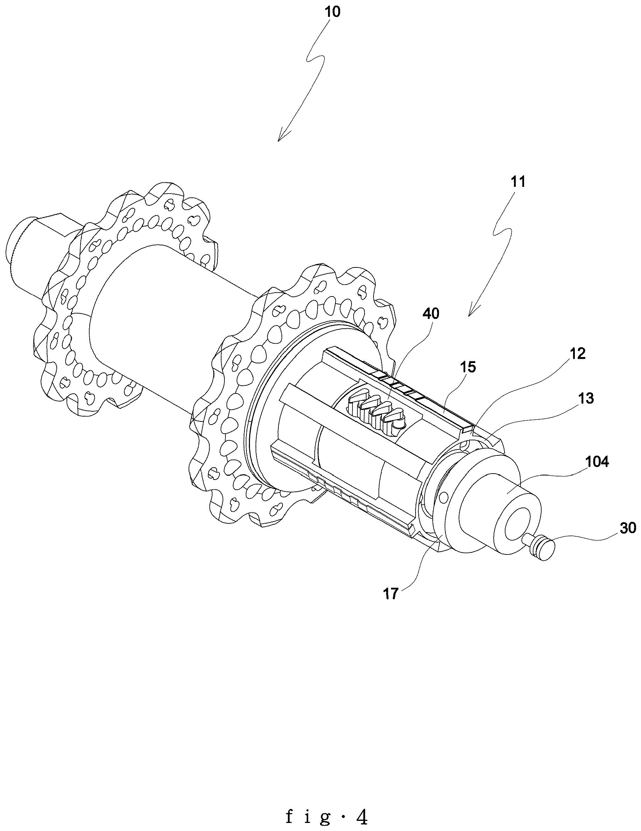

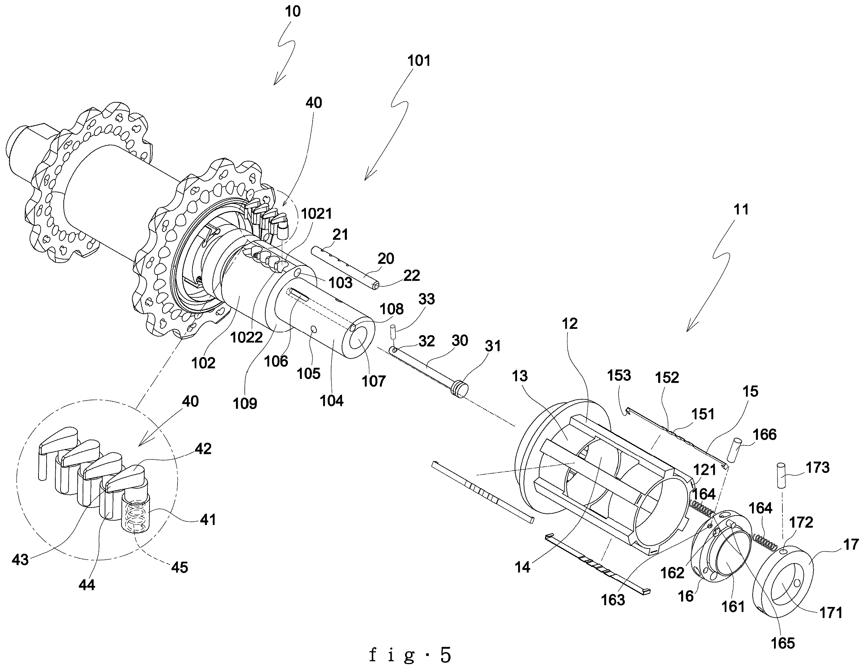

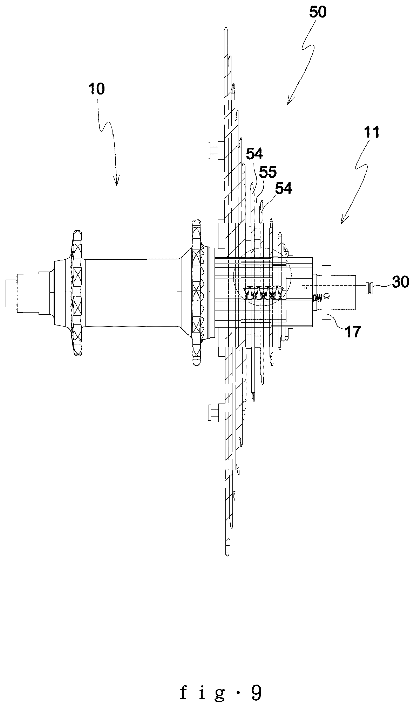

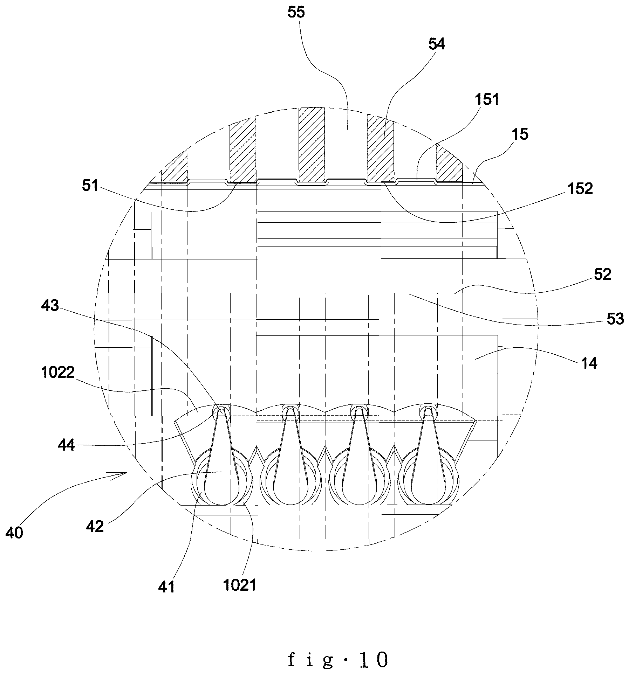

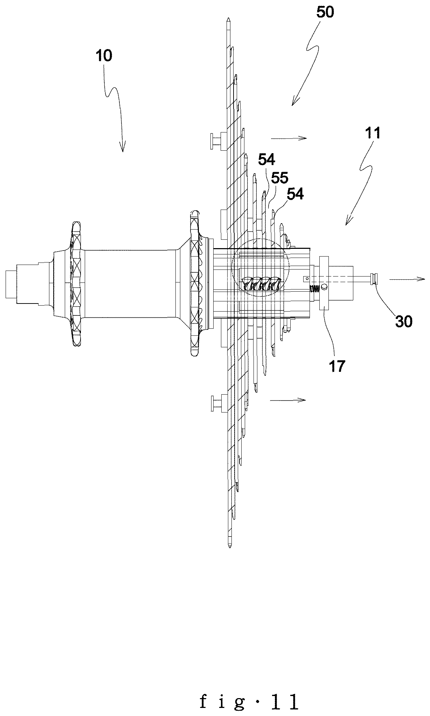

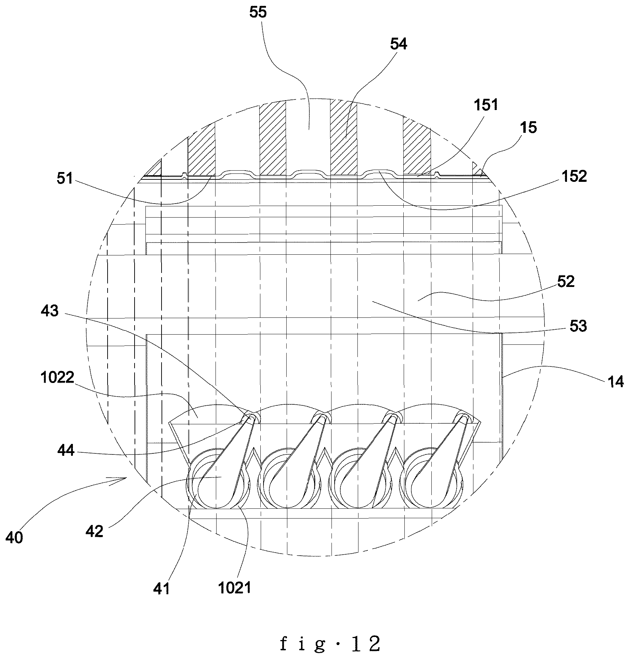

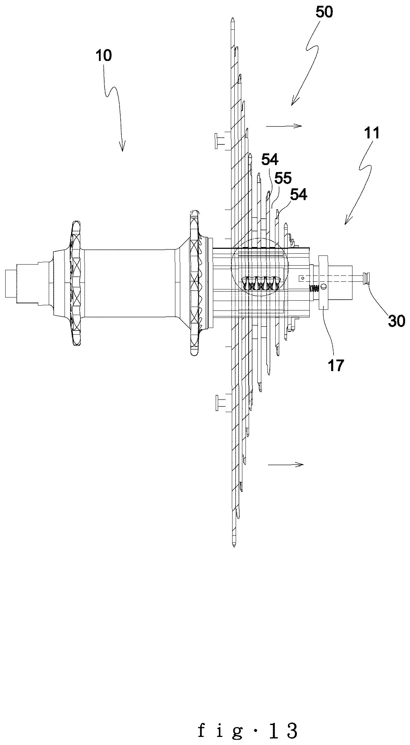

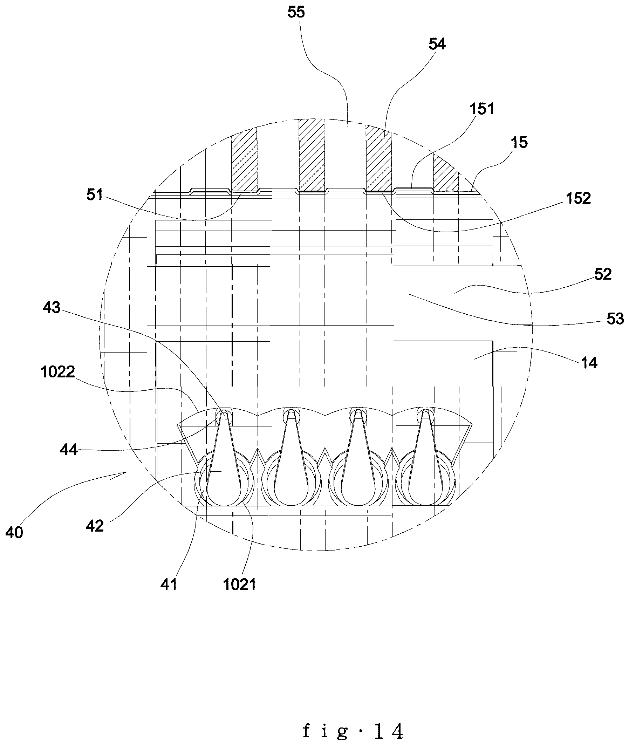

With reference to FIGS. 1-14, a multi-speed drive hub for a bicycle according to a preferred embodiment of the present invention comprises: a hub shaft 10 connected on a center of a wheel rim of the bicycle, and the hub shaft 10 includes a speed-changing transmission 101 arranged on an end thereof.

The speed-changing transmission 101 includes a first extension section 102, a second extension section 104 extending from the first extension section 102, and a stepped shoulder 109 formed on the first extension section 102 and the second extension 104. The first extension section 102 has multiple first notches 1021 defined thereon and has multiple second notches 1022 defined on the multiple first notches 1021 respectively, wherein each of the multiple second notches 1022 is formed in a sector shape.

At least one drive element 40 is arranged on an outer wall of the speed-changing transmission 101, and each of the at least one drive elements 40 includes multiple retainers 42, multiple columns 41 formed from bottoms of the multiple retainers 42 respectively and accommodated in the multiple first notches 1021, multiple force segments 43 arranged on free ends of the multiple retainers 42 and received in the multiple second notch 1022 individually, multiple rotation posts 44 respectively extending from bottoms of the multiple force segments 43 and exposing outside the speed-changing transmission 101, and multiple resilient elements 45 individually accommodated in the multiple columns 41, such that the multiple retainers 42 individually force the multiple resilient elements 45 to move back original positions when rotating.

The stepped shoulder 109 has a receiving portion 103 arranged thereon and configured to receive a driven element 20, and the driven element 20 includes multiple first indentions 21 accommodating the multiple rotation posts 44 respectively. The driven element 20 includes a connection segment 22 extending from an end thereof.

The speed-changing transmission 101 further includes an accommodation chamber 107 defined in a center of the second extension section 104, a slot 108 formed between an outer wall of the second extension section 104 and the accommodation chamber 107 so as to accommodate an actuator 30. The actuator 30 includes a first orifice 32 defined on a first end thereof and includes an operation segment 31 arranged on a second end of the actuator 30 and connected with a driving cable (not shown) of the bicycle. The first orifice 32 accommodates a first bolt 33, the second extension section 104 has a recess 106 defined on the outer wall thereof and corresponding to the slot 108 so that a first end of the first bolt 33 extends out of the recess 106, and a second end of the first bolt 33 is received in a second orifice 167 of a movable element 16. The movable element 16 has a coupling portion 161 connected into the second extension section 104 so that the actuator 30 actuates the movable element 16 to move on the second extension section 104 reciprocately. The movable element 16 has a third orifice 162 for receiving the connection segment 22 of the driven element 20, and a second bolt 166 is inserted into a fourth orifice 163 of the movable element 16 so as to fix the connection segment 22 of the driven element 20 further, and the actuator 30 actuates the movable element 16 and the driven element 20 to move simultaneously.

The movable element 16 further has two defining stems 165 inserted into a first end and a second end of the movable element 16 respectively, two springs 164 fitted on the two defining stems 165 individually, wherein one of the two springs 164 abuts against the stepped shoulder 109 of the speed-changing transmission 101, and the other spring 164 is biased against a stopper 17. The stopper 17 has an insertion portion 171 inserted into the second extension section 104 so that the actuator 30 drives the multiple force segments 43 of each drive element 40 to rotate reciprocately.

The stopper 17 is fixed on the second extension section 104 of the speed-changing transmission 101 by ways of multiple first fixing holes 105 of the second extension section 104, and the stopper 17 has multiple second fixing orifices 172 corresponding to the multiple first fixing holes 105 respectively so that multiple third bolts 173 are inserted through the multiple second fixing orifices 172 and the multiple first fixing holes 105 individually, thus fixing the stopper 17 on the second extension section 104.

A speed shifter 11 includes a fitting sleeve 13 fitted on the speed-changing transmission 101, and the fitting sleeve 13 has a third fixing orifice 14 corresponding to the at least one drive element 40 so that the at least one drive element 40 exposes outside the third fixing orifice 14. The fitting sleeve 13 has multiple ribs 12 extending around an outer wall thereof and has multiple flexible sheets 15 covering the multiple ribs 12 individually, wherein each of the multiple ribs 12 has two cutouts 121 defined on two ends of each rib 12 respectively so as to engage with two hooks of each of the multiple flexible sheets 15 individually, and each flexible sheet 15 has a plurality of dented portions 152 and multiple raised portions 151 which are all arranged on an outer wall of each flexible sheet 15, and each of the plurality of dented portions 152 is defined between any two adjacent raised portions 151.

A sprocket set 50 is meshed with a chain of the bicycle, and the sprocket set 50 includes multiple speed cassettes 54 of different diameters, multiple limitation elements 56 mounted the multiple speed cassettes 54 on a predetermined position of the bicycle (not shown), and multiple spacing spaces 55, each of which is defined any two adjacent speed cassettes 54. The sprocket set 50 further includes a joining portion 51 formed on a center thereof, a force element 52 secured in the joining portion 51 and connected with the fitting sleeve 13, multiple second indentions 53 formed in the force element 52 and retained with the multiple ribs 12 of the speed-changing transmission 101, such that the sprocket set 50 is driven by the speed shifter 11, the multiple speed cassettes 54 are retained with the plurality of dented portions 152 of each flexible sheet 15 respectively, the multiple raised portions 151 of each flexible sheet 15 align with the multiple spacing spaces 55 individually, and the multiple spacing spaces 55 align with the multiple force segments 43 of each drive element 40 respectively, such that the sprocket set 50 is driven by the multiple force segments 43 of the multiple retainers 42 of each drive element 40 to move horizontally, thus changing a speed of the bicycle.

When the driving cable of the bicycle is controlled to urge the operation segment 31 to change the speed of the bicycle, the actuator 30 actuates the movable element 16 to move away from the stopper 17 and drives the driven element 20 to move simultaneously. In the meantime, the multiple first indentions 21 of the driven element 20 respectively rotate the multiple rotation posts 44 of each drive element 40 to a predetermined angle, and the multiple spacing spaces 55 align with the multiple raised portions 151 of each flexible sheet 15 and the multiple force segments 43 of each drive element 40 individually.

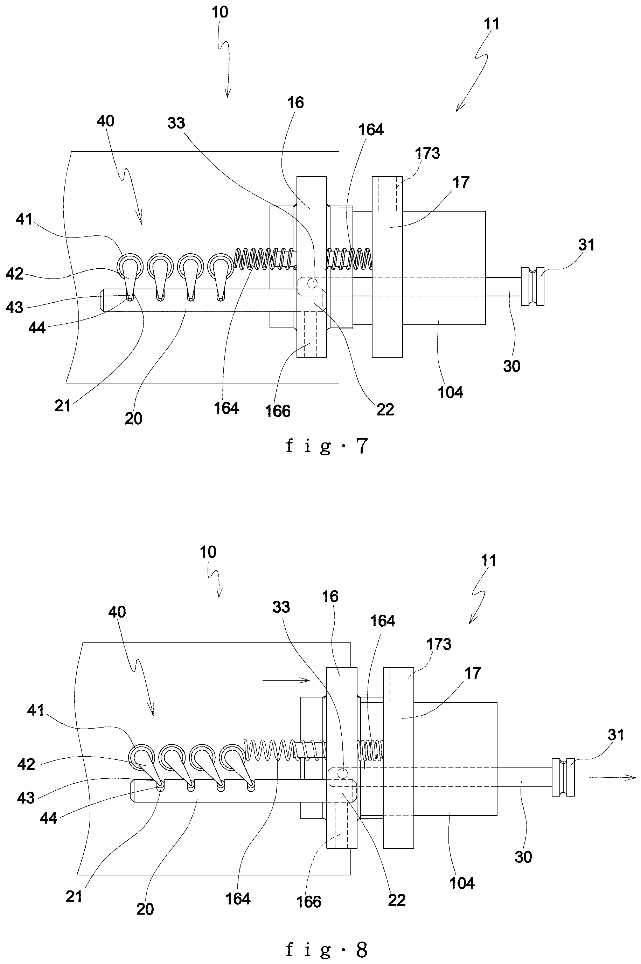

When the multiple rotation posts 44 of each drive element 40 are rotated to the predetermined angle, they drive the sprocket set 50 to move horizontally, as shown in FIGS. 8-14, the multiple speed cassettes 54 are retained with the plurality of dented portions 152 of each flexible sheet 15 respectively and are rotated to engage with the multiple raised portions 151 of each flexible sheet 15 individually so that the multiple speed cassettes 54 press each flexible sheet 15 to move at a distance, and each flexible sheet 15 moves back to an original position, hence the multiple speed cassettes 54 moves to multiple speed changing positions so as to change the speed of the bicycle. Preferably, each flexible sheet 15 is made of flexible steel.

Accordingly, the at least one drive element 40 drives the sprocket set 50 to move so that the actuator 30 moves to the multiple speed changing positions in a release direction relative to the speed-changing transmission 101, and the sprocket set 50 smoothly changes to one of the multiple speed changing positions based on using requirements.

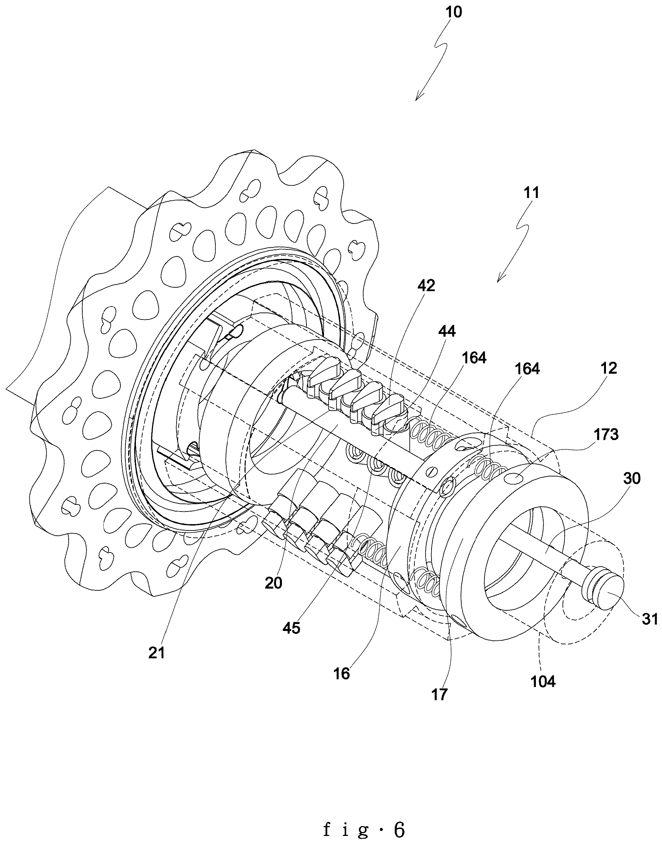

As illustrated in FIG. 6, in another embodiment, multiple driven elements 20 are received around the first extension section 102 of the speed-changing transmission 101.

While the preferred embodiments of the invention have been set forth for the purpose of disclosure, modifications of the disclosed embodiments of the invention and other embodiments thereof may occur to those skilled in the art. The appended claims define the scope of the invention.

## Claims

1. A multi-speed drive hub for a bicycle comprising:
a hub shaft (10) connected on a center of a wheel rim of the bicycle, and the hub shaft (10) including a speed-changing transmission (101) arranged on an end of the hub shaft (10);
a speed-changing transmission (101) including at least one drive element (40) arranged on an outer wall of the speed-changing transmission (101), and the speed-changing transmission (101) including an actuator (30) arranged on an end of the speed-changing transmission (101) and driving multiple force segments (43) of the speed-changing transmission (101) to rotate reciprocately;
a speed shifter (11) including a fitting sleeve (13) fitted on the speed-changing transmission (101), and the fitting sleeve (13) having a third fixing orifice (14) corresponding to the at least one drive element (40) so that the at least one drive element (40) exposes outside the third fixing orifice (14);
a sprocket set (50) including multiple speed cassettes (54) of different diameters, the sprocket set (50) including multiple spacing spaces (55), each of which is defined any two adjacent speed cassettes (54);
**characterized in that**
the fitting sleeve (13) has multiple ribs (12) extending around an outer wall thereof and has multiple flexible sheets (15) covering the multiple ribs (12) individually;
each of the at least one drive elements (40) includes multiple retainers (42), multiple columns (41) formed from bottoms of the multiple retainers (42) respectively, and multiple force segments (43) arranged on free ends of the multiple retainers (42) and exposing outside the speed-changing transmission (101);
each flexible sheet (15) has a plurality of dented portions (152) and multiple raised portions (151) which are all arranged on an outer wall of each flexible sheet (15), and each of the plurality of dented portions (152) is defined between any two adjacent raised portions (151);
the sprocket set (50) includes a joining portion (51) formed on a center thereof, a force element (52) secured in the joining portion (51) and connected with the fitting sleeve (13), and multiple second indentions (53) formed in the force element (52) and retained with the multiple ribs (12) of the speed-changing transmission (101) respectively.

2. The multi-speed drive hub as claimed in claim 1, **characterized in that** the speed-changing transmission (101) includes a first extension section (102), a second extension section (104) extending from the first extension section (102), and a stepped shoulder (109) formed on the first extension section (102) and the second extension (104); the first extension section (102) has multiple first notches (1021) defined thereon and has multiple second notches (1022) defined on the multiple first notches (1021) respectively, wherein each of the multiple second notches (1022) is formed in a sector shape; multiple columns (41) of the multiple retainers (42) are accommodated in the multiple first notches (1021), the multiple force segments (43) of the multiple retainers (42) are received in the multiple second notch (1022) individually, and multiple rotation posts (44) respectively extend from bottoms of the multiple force segments (43), the stepped shoulder (109) has a receiving portion (103) arranged thereon and configured to receive a driven element (20), wherein the driven element (20) includes multiple first indentions (21) accommodating the multiple rotation posts (44) respectively, and the driven element (20) includes a connection segment (22) extending from an end thereof.

3. The multi-speed drive hub as claimed in claim 2, **characterized in that** the speed-changing transmission (101) further includes an accommodation chamber (107) defined in a center of the second extension section (104), a slot (108) formed between an outer wall of the second extension section (104) and the accommodation chamber (107) so as to accommodate the actuator (30), the actuator (30) includes a first orifice (32) defined on a first end thereof and includes an operation segment (31) arranged on a second end of the actuator (30); the first orifice (32) accommodates a first bolt (33), the second extension section (104) has a recess (106) defined on the outer wall thereof and corresponding to the slot (108) so that a first end of the first bolt (33) extends out of the recess (106), and a second end of the first bolt (33) is received in a second orifice (167) of a movable element (16), wherein the movable element (16) has a coupling portion (161) connected into the second extension section (104) so that the actuator (30) actuates the movable element (16) to move on the second extension section (104) reciprocately, wherein the movable element (16) has a third orifice (162) for receiving the connection segment (22) of the driven element (20), and a second bolt (166) is inserted into a fourth orifice (163) of the movable element (16) so as to fix the connection segment (22) of the driven element (20) further, and the actuator (30) actuates the movable element (16) and the driven element (20) to move simultaneously.

4. The multi-speed drive hub as claimed in claim 3, **characterized in that** the movable element (16) further has two defining stems (165) inserted into a first end and a second end of the movable element (16) respectively, two springs (164) fitted on the two defining stems (165) individually, wherein one of the two springs (164) abuts against the stepped shoulder (109) of the speed-changing transmission (101), and the other spring (164) is biased against a stopper (17), wherein the stopper (17) has an insertion portion (171) inserted into the second extension section (104).

5. The multi-speed drive hub as claimed in claim 4, **characterized in that** the stopper (17) is fixed on the second extension section (104) of the speed-changing transmission (101) by ways of multiple first fixing holes (105) of the second extension section (104), and the stopper (17) has multiple second fixing orifices (172) corresponding to the multiple first fixing holes (105) respectively so that multiple third bolts (173) are inserted through the multiple second fixing orifices (172) and the multiple first fixing holes (105) individually, thus fixing the stopper (17) on the second extension section (104).

6. The multi-speed drive hub as claimed in claim 1, **characterized in that** the multiple resilient elements (45) are individually accommodated in the multiple columns (41).

7. The multi-speed drive hub as claimed in claim 1, **characterized in that** multiple driven elements (20) are received around the first extension section (102) of the speed-changing transmission (101).

## Patentansprüche

1. - Mehrgängige Antriebsnabe für ein Fahrrad, umfassend:
eine Nabenwelle (10), die auf einem Zentrum einer Felge des Fahrrads verbunden ist, und wobei die Nabenwelle (10) ein geschwindigkeitsänderndes Getriebe (101) beinhaltet, das auf einem Ende der Nabenwelle (10) angeordnet ist;
ein geschwindigkeitsänderndes Getriebe (101), das mindestens ein Antriebselement (40) beinhaltet, das auf einer äußeren Wand des geschwindigkeitsändernden Getriebes (101) angeordnet ist, und wobei das geschwindigkeitsändernde Getriebe (101) eine Betätigungsvorrichtung (30) beinhaltet, die auf einem Ende des geschwindigkeitsändernden Getriebes (101) angeordnet ist und zahlreiche Kraftsegmente (43) des geschwindigkeitsändernden Getriebes (101) in einer Hin- und Her-Drehung versetzt;
einen Schalthebel (11), darin eingeschlossen eine passende Hülle (13), die auf das geschwindigkeitsändernde Getriebe (101) gepasst ist, und wobei die passende Hülle (13) eine dritte Befestigungsöffnung (14) aufweist, die dem mindestens einen Antriebselement (40) entspricht, so dass das mindestens eine Antriebselement (40) außerhalb der dritten Befestigungsöffnung (14) ausgesetzt ist;
einen Zahnkranzsatz (50), darin eingeschlossen zahlreiche Gangkassetten (54) mit verschiedenen Durchmessern, wobei der Zahnkranzsatz (50) zahlreiche Beabstandungsräume (55) beinhaltet, von denen jeder durch zwei benachbarte Gangkassetten (54) definiert ist;
**dadurch gekennzeichnet, dass**
die passende Hülle (13) zahlreiche Rippen (12) aufweist, die sich um eine äußere Wand davon erstrecken, und zahlreiche flexible Bleche (15) aufweist, die die zahlreichen Rippen (12) einzeln bedecken;
jedes des mindestens einen Antriebselements (40) zahlreiche Rückhalteelemente (42), zahlreiche Säulen (41), die jeweils von Unterseiten der zahlreichen Rückhalteelemente (42) gebildet sind, und zahlreiche Kraftsegmente (43) aufweist, die auf freien Enden der zahlreichen Rückhaltevorrichtungen (42) angeordnet sind und außerhalb des geschwindigkeitsändernden Getriebes (101) ausgesetzt sind;
jedes flexible Blech (15) eine Vielzahl von gezahnten Abschnitten (152) und zahlreiche erhöhte Abschnitte (151) aufweist, die alle auf einer äußeren Wand jedes flexiblen Blechs (15) angeordnet sind, und jeder der Vielzahl von gezahnten Abschnitten (152) zwischen zwei benachbarten erhöhten Abschnitten (151) definiert ist;
der Zahnkranzsatz (50) einen Verbindungsabschnitt (51), der auf einem Zentrum davon gebildet ist, ein Kraftelement (52), das im Verbindungselement (51) gesichert und mit der passenden Hülle (13) verbunden ist, und zahlreiche zweite Zahnungen (53), die im Kraftelement (52) gebildet und jeweils mit den zahlreichen Rippen (12) des geschwindigkeitsändernden Getriebes (101) zurückgehalten sind, umfasst.

2. - Mehrgängige Antriebsnabe nach Anspruch 1, **dadurch gekennzeichnet, dass** das geschwindigkeitsändernde Getriebe (101) einen ersten Erweiterungsabschnitt (102), einen zweiten Erweiterungsabschnitt (104), der sich vom ersten Erweiterungsabschnitt (102) erstreckt, und einen gestuften Absatz (109), der auf dem ersten Erweiterungsabschnitt (102) und dem zweiten Erweiterungsabschnitt (104) gebildet ist, beinhaltet; auf dem ersten Erweiterungsabschnitt (102) zahlreiche erste Kerben (1021) definiert sind und zahlreiche zweite Kerben (1022) jeweils auf den zahlreichen ersten Kerben (1021) definiert sind, wobei jede der zahlreichen zweiten Kerben (1022) in einer Sektorform gebildet sind; zahlreiche Säulen (41) der zahlreichen Rückhaltevorrichtungen (42) in den zahlreichen ersten Kerben (1021) aufgenommen sind, die zahlreichen Kraftsegmente (43) der zahlreichen Rückhaltevorrichtungen (42) in den zahlreichen zweiten Kerben (1022) einzeln aufgenommen sind, und zahlreiche Drehstifte (44) sich jeweils von unteren Seiten die zahlreichen Kraftsegmente (43) erstrecken, der gestufte Absatz (109) einen Aufnahmeabschnitt (103) aufweist, der darauf angeordnet und konfiguriert ist, um ein angetriebenes Element (20) aufzunehmen, wobei das angetriebene Element (20) zahlreiche erste Zahnungen (21) beinhaltet, die jeweils die zahlreichen Drehstifte (44) aufnehmen, und das angetriebene Element (20) ein Verbindungssegment (22) beinhaltet, das sich vom Ende davon erstreckt.

3. - Mehrgängige Antriebsnabe nach Anspruch 2, **dadurch gekennzeichnet, dass** das geschwindigkeitsändernde Getriebe (101) weiter eine Aufnahmekammer (107) beinhaltet, die in einem Zentrum der zweiten Erweiterungssektion (104) definiert ist, einen Schlitz (108), der zwischen einer äußeren Wand der zweiten Erweiterungssektion (104) und der Aufnahmekammer (107) gebildet ist, um die Betätigungsvorrichtung (30) aufzunehmen, die Betätigungsvorrichtung (30) eine erste Öffnung (32), die auf dem ersten Ende davon definiert ist, beinhaltet, und ein Betriebssegment (31) beinhaltet, das auf einem zweiten Ende der Betätigungsvorrichtung (30) angeordnet ist; die erste Öffnung (32) einen ersten Bolzen (33) aufnimmt, die zweite Erweiterungssektion (104) eine Aussparung (106) aufweist, die auf der äußeren Wand davon definiert ist und dem Schlitz (108) entspricht, so dass sich ein erstes Ende des ersten Bolzens (33) aus der Aussparung (106) erstreckt und ein zweites Ende des ersten Bolzens (33) in einer zweiten Öffnung (167) eines beweglichen Elements (16) aufgenommen ist, wobei das bewegliche Element (16) einen Kopplungsabschnitt (161) aufweist, der in die zweite Erweiterungssektion (104) verbunden ist, so dass die Betätigungsvorrichtung (30) das bewegliche Element (16) betätigt, um sich auf der zweiten Erweiterungssektion (104) hin und her zu bewegen, wobei das bewegliche Element (16) eine dritte Öffnung (162) aufweist, um das Verbindungssegment (22) des angetriebenen Elements (20) aufzunehmen, und ein zweiter Bolzen (166) in eine vierte Öffnung (163) des beweglichen Elements (16) eingeführt ist, um das Verbindungssegment (22) des angetriebenen Elements (20) weiter zu befestigen, und die Betätigungsvorrichtung (30) das bewegliche Element (16) und das angetriebene Element (20) betätigt, um sich gelichzeitig zu bewegen.

4. - Mehrgängige Antriebsnabe nach Anspruch 3, **dadurch gekennzeichnet, dass** das bewegliche Element (16) weiter zwei definierende Schäfte (165) aufweist, die jeweils in ein erstes Ende und ein zweites Ende des beweglichen Elements (16) eingeführt sind, zwei Federn (164), die auf den zwei definierenden Schäften (165) individuell angepasst sind, wobei eine der zwei Federn (164) gegen den gestuften Absatz (109) des geschwindigkeitsändernden Getriebes (101) stößt und die andere Feder (164) gegen einen Stopper (17) vorgespannt ist, wobei der Stopper (17) einen Einführungsabschnitt (171) aufweist, der in die zweite Erweiterungssektion (104) eingeführt ist.

5. - Mehrgängige Antriebsnabe nach Anspruch 4, **dadurch gekennzeichnet, dass** der Stopper (17) auf die zweite Erweiterungssektion (104) des geschwindigkeitsändernden Getriebes (101) mit Hilfe zahlreicher erster Befestigungslöcher (105) der zweiten Erweiterungssektion (104) befestigt ist und der Stopper (17) zahlreiche zweite Befestigungsöffnungen (172) aufweist, die jeweils den zahlreichen ersten Befestigungslöchern (105) entsprechen, so dass die zahlreichen dritten Bolzen (173) durch die zahlreichen zweiten Befestigungsöffnungen (172) und die zahlreichen ersten Befestigungslöcher (105) einzeln eingeführt sind, so dass die Stopper (17) auf die zweite Erweiterungssektion (104) befestigt sind.

6. - Mehrgängige Antriebsnabe nach Anspruch 1, **dadurch gekennzeichnet, dass** die zahlreichen elastischen Elemente (45) einzeln in den zahlreichen Säulen (41) aufgenommen sind.

7. - Mehrgängige Antriebsnabe nach Anspruch 1, **dadurch gekennzeichnet, dass** zahlreiche angetriebene Elemente (20) um die erste Erweiterungssektion (102) des geschwindigkeitsändernden Getriebes (101) aufgenommen sind.

## Revendications

1. - Moyeu d'entraînement à plusieurs vitesses pour une bicyclette comprenant :
un arbre de moyeu (10) relié sur un centre d'une jante de roue de la bicyclette, et l'arbre de moyeu (10) comprenant une transmission de changement de vitesse (101) agencée sur une extrémité de l'arbre de moyeu (10) ;
une transmission de changement de vitesse (101) comprenant au moins un élément d'entraînement (40) disposé sur une paroi externe de la transmission de changement de vitesse (101), et la transmission de changement de vitesse (101) comprenant un actionneur (30) agencé sur une extrémité de la transmission de changement de vitesse (101) et entraînant de multiples segments de force (43) de la transmission de changement de vitesse (101) en rotation en va-et-vient ;
un changeur de vitesse (11) comprenant un manchon de montage (13) monté sur la transmission de changement de vitesse (101), et le manchon de montage (13) ayant un troisième orifice de fixation (14) correspondant à l'au moins un élément d'entraînement (40) de telle sorte que l'au moins un élément d'entraînement (40) est exposé à l'extérieur du troisième orifice de fixation (14) ;
un jeu de pignons (50) comprenant de multiples cassettes de vitesse (54) de différents diamètres, le jeu de pignons (50) comprenant de multiples espaces d'espacement (55), dont chacun est défini par deux cassettes de vitesse adjacentes (54) ;
**caractérisé par le fait que**
le manchon de montage (13) a de multiples nervures (12) s'étendant autour d'une paroi externe de celui-ci et a de multiples feuilles souples (15) recouvrant individuellement les multiples nervures (12) ;
chacun de l'au moins un élément d'entraînement (40) comprend de multiples éléments de retenue (42), de multiples colonnes (41) formées à partir de parties inférieures des multiples éléments de retenue (42), respectivement, et de multiples segments de force (43) agencés sur des extrémités libres des multiples éléments de retenue (42) et s'exposant à l'extérieur de la transmission de changement de vitesse (101) ;
chaque feuille souple (15) a une pluralité de parties renfoncées (152) et de multiples parties en relief (151) qui sont toutes disposées sur une paroi externe de chaque feuille souple (15), et chacune de la pluralité de parties renfoncées (152) est définie entre deux parties en relief adjacentes (151) ;
le jeu de pignons (50) comprend une partie de jonction (51) formée sur un centre de celui-ci, un élément de force (52) fixé dans la partie de jonction (51) et relié au manchon de montage (13), et de multiples secondes renfoncements (53) formés dans l'élément de force (52) et retenus respectivement avec les multiples nervures (12) de la transmission de changement de vitesse (101).

2. - Moyeu d'entraînement à plusieurs vitesses selon la revendication 1, **caractérisé par le fait que** la transmission de changement de vitesse (101) comprend une première section d'extension (102), une seconde section d'extension (104) s'étendant à partir de la première section d'extension (102), et un épaulement étagé (109) formé sur la première section d'extension (102) et la seconde section d'extension (104) ; la première section d'extension (102) a de multiples premières encoches (1021) définies sur celle-ci et a de multiples secondes encoches (1022) définies respectivement sur les multiples premières encoches (1021), chacune des multiples secondes encoches (1022) étant réalisée en une forme de secteur ; de multiples colonnes (41) des multiples éléments de retenue (42) sont reçues dans les multiples premières encoches (1021), les multiples segments de force (43) des multiples éléments de retenue (42) sont reçus individuellement dans les multiples secondes encoches (1022), et de multiples montants de rotation (44) s'étendent respectivement à partir de parties inférieures des multiples segments de force (43), l'épaulement étagé (109) a une partie de réception (103) agencée sur celui-ci et configurée pour recevoir un élément entraîné (20), l'élément entraîné (20) comprenant de multiples premiers renfoncements (21) recevant respectivement les multiples montants de rotation (44), et l'élément entraîné (20) comprenant un segment de liaison (22) s'étendant à partir d' une extrémité de celui-ci.

3. - Moyeu d'entraînement à plusieurs vitesses selon la revendication 2, **caractérisé par le fait que** la transmission de changement de vitesse (101) comprend en outre une chambre de réception (107) définie dans un centre de la seconde section d'extension (104), une fente (108) formée entre une paroi externe de la seconde section d'extension (104) et la chambre de réception (107) de façon à recevoir l'actionneur (30), l'actionneur (30) comprend un premier orifice (32) défini sur une première extrémité de celui-ci et comprend un segment d'actionnement (31) agencé sur une seconde extrémité de l'actionneur (30) ; le premier orifice (32) reçoit un premier boulon (33), la seconde section d'extension (104) a un évidement (106) défini sur la paroi externe de celle-ci et correspondant à la fente (108) de telle sorte qu'une première extrémité du premier boulon (33) s'étend hors de l'évidement (106), et une seconde extrémité du premier boulon (33) est reçue dans un deuxième orifice (167) d'un élément mobile (16), l'élément mobile (16) ayant une partie d'accouplement (161) reliée dans la seconde section d'extension (104) de telle sorte que l'actionneur (30) actionne l'élément mobile (16) pour se déplacer sur la seconde section d'extension (104) en va-et-vient, l'élément mobile (16) ayant un troisième orifice (162) pour recevoir le segment de liaison (22) de l'élément entraîné (20), et un deuxième boulon (166) étant introduit dans un quatrième orifice (163) de l'élément mobile (16) de façon à fixer davantage le segment de liaison (22) de l'élément entraîné (20), et l'actionneur (30) actionnant l'élément mobile (16) et l'élément entraîné (20) pour qu'ils se déplacent simultanément.

4. - Moyeu d'entraînement à plusieurs vitesses selon la revendication 3, **caractérisé par le fait que** l'élément mobile (16) a en outre deux tiges de définition (165) introduites respectivement dans une première extrémité et une seconde extrémité de l'élément mobile (16), deux ressorts (164) montés individuellement sur les deux tiges de définition (165), l'un des deux ressorts (164) étant en butée contre l'épaulement étagé (109) de la transmission de changement de vitesse (101), et l'autre ressort (164) étant sollicité contre une butée (17), la butée (17) ayant une partie d'introduction (171) introduite dans la seconde section d'extension (104).

5. - Moyeu d'entraînement à plusieurs vitesses selon la revendication 4, **caractérisé par le fait que** la butée (17) est fixée sur la seconde section d'extension (104) de la transmission de changement de vitesse (101) au moyen de multiples premiers trous de fixation (105) de la seconde section d'extension (104), et la butée (17) a de multiples seconds orifices de fixation (172) correspondant respectivement aux multiples premiers trous de fixation (105), de telle sorte que de multiples troisièmes boulons (173) sont introduits individuellement à travers les multiples seconds orifices de fixation (172) et les multiples premiers trous de fixation (105), fixant ainsi la butée (17) sur la seconde section d'extension (104).

6. - Moyeu d'entraînement à plusieurs vitesses selon la revendication 1, **caractérisé par le fait que** les multiples éléments élastiques (45) sont reçus individuellement dans les multiples colonnes (41).

7. - Moyeu d'entraînement à plusieurs vitesses selon la revendication 1, **caractérisé par le fait que** de multiples éléments entraînés (20) sont reçus autour de la première section d'extension (102) de la transmission de changement de vitesse (101).
